# EUROPÄISCHE PATENTSCHRIFT

(11) **EP 2 681 523 B1**
(45) Veröffentlichungstag und Bekanntmachung des Hinweises auf die Patenterteilung: **06.05.2015**
(21) Anmeldenummer: 12708087.7
(22) Anmeldetag: 01.03.2012
(51) Int. Cl.: G01K 1/02, G01K 1/14

(54) **VORRICHTUNG ZUM ERFASSEN DER INNENTEMPERATUR EINES NAHRUNGSMITTELS**
DEVICE FOR DETECTING THE INTERNAL TEMPERATURE OF A FOODSTUFF
DISPOSITIF DE DÉTECTION DE LA TEMPÉRATURE INTÉRIEURE D'UN PRODUIT ALIMENTAIRE

(30) Priorität: 04.03.2011 DE 202011003569 U; 14.04.2011 US 201161475412 P
(43) Veröffentlichungstag der Anmeldung: 08.01.2014
(73) Patentinhaber: Tecpoint GmbH, 82515 Wolfratshausen (DE)
(72) Erfinder: SONNENDORFER, Horst, 82178 Puchheim (DE)
(74) Vertreter: Grünecker Patent- und Rechtsanwälte PartG mbB
(86) Internationale Anmeldenummer: PCT/EP2012/000900
(87) Internationale Veröffentlichungsnummer: WO 2012/119725

(56) Entgegenhaltungen:
- WO-A1-2008/051148
- DE-A1-102009 047 418
- US-A1- 2005 201 445

## Beschreibung

Die Erfindung bezieht sich auf eine Vorrichtung zum Erfassen der Innentemperatur eines Nahrungsmittels, insbesondere eine Vorrichtung zum Erfassen eines Garzustandes eines zuzubereitenden Fleischstückes, gemäß dem Oberbegriff von Anspruch 1. Die Erfindung bezieht sich weiterhin auf ein Verfahren zum Zubereiten eines Nahrungsmittels durch einen Garvorgang, insbesondere einen Grillvorgang.

Bei Nahrungsmitteln, die gegart werden, wird die Temperatur und die Länge der Zubereitung üblicherweise durch die Art des Nahrungsmittels und den gewünschten Endgargrad bestimmt. Bei Fisch reicht üblicherweise eine kurze Zubereitungszeit, zum Beispiel wenn man Thunfisch leicht rosa zubereiten will. Bei Lamm und Rindfleisch wiederum gibt es eine große Bandbreite der Zubereitung, beziehungsweise des gewünschten Endgargrades. So wird beispielsweise für Rinder-Steaks der gewünschte Endgargrad durch die Bezeichnungen "Blue Rare", "Rare", "Medium Rare", "Medium", "Medium Well" und "Well Done" bestimmt, wobei die üblichste Zubereitungsart medium Rare" ist. Da Steaks üblicherweise eine gewisse Mindestdicke aufweisen, nämlich vorzugsweise mindestens 2,5 cm (1 Inch), besser 3,8 cm (1,5 Inch) oder noch besser 5 cm (2 Inch), ist es oftmals schwierig zu beurteilen, welcher Garzustand im Inneren des Steaks vorliegt, da schon eine geringe Abweichung bezüglich der Erhitzungstemperatur oder der Garzeit den Endgarzustand wesentlich verändern können. Bei anderen Fleischsorten dagegen, zum Beispiel bei Huhn, Schweinefleisch oder Hammel wird üblicherweise ein vollständiges Durchgaren angestrebt. Sollten die zuzubereitenden Stücke ebenfalls eine gewisse Dicke überschreiten, ist es schwierig nachzuprüfen, ob das Innere der Stücke bereits vollständig durchgegart ist, oder noch weitere Zeit erhitzt werden sollte.

Temperaturmessgeräte zur Bestimmung der Temperatur innerhalb eines Nahrungsmittels sind mannigfaltig bekannt. So offenbart beispielsweise die gattungsgemäße DE 20 2006 004 171 U1 ein Prüfgerät zur Bestimmung einer Verzehrbarkeit eines Lebensmittels, das eine temperatursensible Messsonde aufweist, die in ein Lebensmittel eingeführt wird, wobei entlang der Messsonde mehrere Messsensoren angeordnet sind, sodass die Temperaturwerte an verschiedenen Positionen im Lebensmittel bestimmt werden können. Am Ende der Messsonde ist ein Gehäuse vorgesehen, das die Sensorsignale auswertet, und mittels Leuchtdioden anzeigt, ob sämtliche Temperaturwerte, die von den Messsensoren ermittelt wurden, oberhalb eines Sollwerts liegen.

Dieses Prüfgerät kann nicht während der Zubereitung im Lebensmittel verbleiben, da die in dem Gehäuse angeordnete Messelektronik temperaturempfindlich ist. Für jeden Prüfvorgang muss das Prüfgerät in das Lebensmittel eingeführt werden, wobei dafür insbesondere das Lebensmittel vom Grill, aus der Pfanne oder aus dem Backofen entnommen werden muss.

Da dies aufwendig ist, eignet sich dieses Prüfgerät nur für den beschriebenen Verwendungszweck, nämlich das Überprüfen, ob ein Lebensmittel vollständig durchgegart ist, aber nicht für die Bestimmung eines genauer definierten Garzustandes, z.B. ein nur teilweises Durchgaren des Lebensmittels.

Weiterhin sind im Stand der Technik Öfen bekannt, die mit einem im Garraum vorgesehenen Fühlerelement ausgestattet sind, das in ein Nahrungsmittel eingeführt werden kann, und eine Heizung des Ofens in Abhängigkeit von der Temperatur im Kernbereich des Gargutes steuert. So offenbart die DE 44 21 373 A1 einen derartigen Ofen mit einem Fühlerelement, dessen Elektronikbauteile im Bereich der Spitze angeordnet sind, wodurch eine Überhitzung der Elektronikbauteile ausgeschlossen werden soll. Die DE 44 21 373 A1 offenbart weiterhin, dass das Fühlerelement eine drahtlose Übertragung des Temperatursignals ermöglicht, wobei hierfür alternativ ein Funksender, Ultraschallsender oder optischer Sender vorgesehen sind. Allerdings kann das Fühlerelement lediglich mit dem Ofen betrieben werden, da das Temperatursignal durch den Ofen ausgewertet wird, und am Fühlerelement selbst nicht ablesbar ist.

Weiterhin sind im Stand der Technik noch mechanisch arbeitende Messgeräte bekannt, die zwar eine ausreichende Temperaturbeständigkeit aufweisen, um während der Zubereitung im Nahrungsmittel zu verbleiben. Sie sind allerdings nicht genau oder ausreichend aussagekräftig, um eine Zubereitung eines Nahrungsmittels in einen genau definierten Garzustand zu ermöglichen. Die Präzision des Temperaturmesssensors und die genaue Anzeige des Erreichens wenigstens eines Garzustands sind ausschlaggebend für das Ergebnis der Zubereitung, d.h. den Endgarzustand.

Weitere Beispiele von Temperaturmessgeräten, die die Temperatur von Mahrungsmitteln messen können, sind in US 2005/02 014 45 A1

und WO 2008/05 11 48 A1 zu finden.

Der Erfindung liegt somit die Aufgabe zugrunde, eine vielseitig einsetzbare Vorrichtung der eingangs genannten Art zu schaffen, die autark arbeitet, d.h. ohne zusätzliche Hilfsmittel, das Erreichen eines präzisen Garzustandes eines Nahrungsmittels meldet.

Erfindungsgemäß wird eine Vorrichtung zum Erfassen der Innentemperatur eines Nahrungsmittels bereitgestellt, mit wenigstens einem Temperatursensor, der in einem in das Nahrungsmittel für die Messung einführbaren, ersten Gehäuseabschnitt angeordnet ist, während ein zweiter Gehäuseabschnitt aus dem Nahrungsmittel herausragt, sowie mit einer Spannungsquelle, einer elektronischen Auswerteeinheit zum Überprüfen wenigstens einer vorgegebenen Temperaturbedingung und einer Temperaturanzeige, wobei die Vorrichtung autark ist, und wobei zum präzisen, vornehmlich kontinuierlichen Messen der Innentemperatur des Nahrungsmittels während der Zubereitung, insbesondere während eines Grillvorgangs, der erste Gehäuseabschnitt ausgelegt ist innerhalb des Nahrungsmittels zu verbleiben, und hierzu wenigstens die Auswerteeinheit und die Temperaturanzeige in dem ersten Gehäuseabschnitt angeordnet sind, und der zweite Gehäuseabschnitt so gestaltet ist, dass eine von der Auswerteeinheit durch die Temperaturanzeige ausgegebene Information wahrnehmbar ist.

Die Temperaturanzeige kann die Information, insbesondere die wenigstens ein Temperaturbedingung, sichtbar, hörbar, spürbar oder durch eine Kombination davon anzeigen.

Insbesondere wird die Information auf der Temperaturanzeige sichtbar ausgegeben. Vorteilhaft ist eine Kombination aus einem akustischen und optischen Signal.

Die Verwendung einer elektronischen Auswerteeinheit, insbesondere eines Mikrocontrollers, für die Auswertung des Sensors ermöglicht eine präzise Erfassung und Auswertung und aussagekräftige Darstellung der Temperaturbedingung. Das vornehmlich kontinuierliche Messen bezieht sich z. B. auf eine digitale Auswertung eines analogen Sensorsignals mit üblichen Samplingabständen.

Dadurch, dass die elektronische Auswerteeinheit und die Temperaturanzeige in dem ersten Gehäuseabschnitt angeordnet sind, der bei der Zubereitung innerhalb des Nahrungsmittels verbleibt, wirkt das Nahrungsmittel als Isolierung und verhindert eine Überhitzung dieser empfindlichen Bauteile.

Die Solltemperaturen innerhalb des Nahrungsmittels liegen bei der Zubereitung eines Rindfleischstücks bei ungefähr 50 bis 75 Grad Celsius, wobei wenige Grad Temperaturunterschied für den Erfolg des Zubereitens ausschlaggebend sind. Dies gilt insbesondere für eine Zubereitung durch Grillen, Backen, Braten, Garen von Nahrungsmitteln in einem Ofen, in einer Pfanne oder auf einem Grill.

Da die Vorrichtung autark ist, kann sie allein und vielseitig eingesetzt werden, wobei es dennoch möglich ist, die Innentemperatur des Nahrungsmittels kontinuierlich und präzise zu messen. Zur Zubereitung eines Nahrungsmittels benötigt man lediglich eine Wärmequelle und die erfindungsgemäße Vorrichtung, die keinerlei Zubehörteile oder Anpassungen an der Wärmequelle erfordert.

Der zweite Gehäuseabschnitt weist insbesondere ein Sichtfenster, einen transparenten oder transluzenten Abschnitt oder eine Öffnung auf, wodurch die von der Auswerteeinheit auf der Temperaturanzeige ausgegebene Information sichtbar ist. Bei anderen Ausführungsbeispielen kann der zweite Gehäuseabschnitt zum Melden der Information so ausgelegt sein, dass er zum Beispiel seine Farbe ändert, blinkt, summt, vibriert, eine Melodie spielt oder Ähnliches.

Die Temperaturanzeige kann insbesondere verschiedene Betriebs- und Garzustände anzeigen. So kann die Temperaturanzeige insbesondere die Zustände "eingeschaltet", "unterhalb der Solltemperatur", "geringer Abstand zur Solltemperatur", "Erreichen beziehungsweise Überschreiten der Solltemperatur", und/oder "Erreichen der Serviertemperatur" anzeigen.

Der erste Gehäuseabschnitt ist vornehmlich länglich ausgeführt, und kann eine Spitze aufweisen, sodass er in das Nahrungsmittel für die Messung einführbar ist. Der zweite Gehäuseabschnitt kann hingegen eine Handhabe aufweisen, d.h. insbesondere einen verbreiterten Bereich des Gehäuses, der einfach ergriffen werden kann und einen Anschlag beim vollständigen Einführen in das Nahrungsmittel bildet, sodass ein einfaches Einführen und Abziehen in und aus dem Nahrungsmittel möglich ist.

In einer Ausführungsform der Erfindung ist der Temperatursensor so angeordnet, dass eine integrale Temperaturmessung über zumindest ein Bereich des ersten Gehäuseabschnitts erfolgt. Im Stand der Technik sind oftmals Temperatursensoren bekannt, die direkt an der Spitze eines nadelartigen Abschnitts der Vorrichtung, oder direkt an der Innenwand des nadelförmigen Abschnitts der Vorrichtung angeordnet sind. Dadurch wird aber die Temperatur lediglich punktuell in einem engen Bereich erfasst, sodass das Messergebnis durch lokal abweichende Temperaturen verfälscht werden könnte. Deswegen ist es im Stand der Technik ebenfalls bekannt, mehrere Sensoren entlang der Länge eines nadelartigen Gehäuseabschnitts zu verteilen, und die einzelnen Temperaturmessungen gemeinsam auszuwerten. Dies bedingt aber eine erheblich aufwendigere Konstruktion und Auswertung. Dahingegen ermöglicht die integrale Temperaturmessung über einen Bereich des ersten Gehäuseabschnitts eine verlässlichere Messung mit nur einem punktuell angeordneten Temperatursensor. Die integrale Temperaturmessung kann beispielsweise dadurch ermöglicht werden, dass ein hochwärmleitfähiges Material, wie zum Beispiel Kupfer, zwischen dem Temperatursensor und dem Gehäuse angebracht wird, sodass die Temperaturen im breiten Messfeld des wärmeleitfähigen Materials dem Sensor zugeleitet werden.

In einer Ausführungsform kann der Temperatursensor zur Innenseite des ersten Gehäuseabschnitts beabstandet sein. Die Beabstandung bewirkt wiederum, dass die Temperaturwerte an einem größerem Bereich des Gehäuses durch den Temperatursensor berücksichtigt werden, da das Verhältnis der Abstände zwischen dem Sensor und dem nächstliegenden Gehäusepunkt, und dem Sensor und einem weiter entfernten Gehäusepunkt größer wird.

Vorteilhafterweise ist ein Hohlraum zwischen dem wenigstens einen Temperatursensor und der Innenseite des ersten Gehäuseabschnitts vorgesehen. Der Hohlraum bewirkt, dass die Temperaturübertragung vom ersten Gehäuseabschnitt zum Sensor verlangsamt wird, sodass temporär und lokal auftretende Temperaturspitzen ausgemittelt werden, und eine verlässliche, geglättete und integrale Temperaturmessung über einen größeren Bereich durchgeführt wird.

Vorteilhafterweise ist eine Statusanzeige zum Anzeigen der von der Temperaturanzeige ausgegebenen Information am zweiten Gehäuseabschnitt angeordnet und verbleibt bei der Zubereitung außerhalb des Nahrungsmittels. Die Statusanzeige kann insbesondere durch eine Öffnung, ein Fenster oder Lichtstreuelement gebildet sein, das entweder den Blick auf die Temperaturanzeige freigibt, oder das von der Temperaturanzeige ausgegebene Signal nach außen weitermeldet.

Vorteilhafterweise kann die Statusanzeige ein transparenter oder transluzenter Bereich des zweiten Gehäuseabschnitts sein. Wenn der zweite Gehäuseabschnitt beispielsweise aus Metall ausgeführt ist, kann bereichsweise ein trüber oder klarer Glaskörper vorgesehen sein, der die Statusanzeige bildet.

Insbesondere können auch mehrere Statusanzeigen voneinander abgegrenzt am zweiten Gehäuseabschnitt vorgesehen sein, oder der zweite Gehäuseabschnitt kann insgesamt transparent oder transluzent ausgeführt sein und somit die Statusanzeige bilden.

Der erste Gehäuseabschnitt und der zweite Gehäuseabschnitt können Teil eines integralen Gehäuses sein. Alternativ kann das Gehäuse auch aus mehreren Gehäuseteilen bestehen, wobei deren Begrenzungen vornehmlich unabhängig von der Definition des ersten und zweiten Gehäuseabschnitts sind.

In einem Ausführungsbeispiel ist die Temperaturanzeige mit der Statusanzeige durch einen oder mehrere Lichtleiter, insbesondere eine Glasleitung oder Glasfaserleitung, optisch miteinander verbunden. Damit kann eine effiziente Übertragung des von der Temperaturanzeige ausgegebenen Signals auf die Statusanzeige erfolgen. Mehrere Lichtleiter sind insbesondere dann vorgesehen, wenn die Temperaturanzeige mehrere Leuchtmittel aufweist, die voneinander unabhängig verschiedene Signale, zum Beispiel verschiedenfarbige Lichtsignale ausgeben, die dann an eine oder mehrere Statusanzeigen geleitet werden.

Vorteilhafterweise ist die Auswerteeinheit ausgelegt, zur Bestimmung eines Garzustandes eine Temperatur in Abhängigkeit vom Temperaturgradienten und/oder der Temperatur zu überwachen. Bei der einfachsten Variante überwacht die Auswerteinheit, ob eine Grenztemperatur überschritten wurde. Nachdem die Temperatur je nach Heizleistung unterschiedlich schnell im Nahrungsmittel ansteigt, kann es auch vorteilhaft sein, zusätzlich zur Temperatur, den zeitlichen Temperaturgradienten zu erfassen, um zu bestimmen, wie schnell das Nahrungsmittel erhitzt wird. Insbesondere können bei einem schnellen Erhitzen des Fleischstücks äußere Bereiche eine erheblich höhere Temperatur aufweisen als der innere Bereich, sodass die Innentemperatur auch nach dem Erhitzen des Nahrungsmittels noch weiter ansteigt (sogenanntes Nachgaren). Ein hoher zeitlicher Temperaturgradient ist ein Indikator für ein solches schnelles Erhitzen ist. Insbesondere kann die Temperaturbedingung das Überschreiten eines Grenzwerts durch eine gewichtete Summe aus zeitlichem Temperaturgradient und Temperatur sein, wobei bei Überschreiten des Grenzwerts bestimmt wird, dass ein definierter Garzustand erreicht ist, beziehungsweise in der Nachgarzeit erreicht wird. Beim Einsatz von mehreren Temperatursensoren in der Vorrichtung kann auch ein räumlicher Temperaturgradient bestimmt werden, der Rückschlüsse darauf ermöglicht, wie gleichmäßig das Nahrungsmittel erhitzt wurde.

In einer Ausführungsform ist die Vorrichtung darauf ausgelegt, das Erreichen einer ersten Temperaturbedingung, und weiterhin das darauffolgende Erreichen einer zweiten Temperaturbedingung oder einer Zeitbedingung durch die Temperaturanzeige anzuzeigen, wodurch insbesondere eine Überwachung einer Nachgarzeit möglich ist. Da das Nahrungsmittel gewöhnlicherweise von außen erhitzt wird, liegt ein Temperaturgefälle von den äußeren Bereichen des Nahrungsmittels zu inneren Bereichen vor. Der Temperaturausgleich durch Konduktion innerhalb des Nahrungsmittels nach Ende der Erhitzens bedingt, dass die Temperatur in den Außenbereichen des Nahrungsmittels eher abnimmt, während die Temperatur im Innenbereich leicht zunimmt.

Das Erreichen der idealen Verzehrtemperatur in der Nachgarzeit kann dadurch bestimmt werden, dass das Erreichen einer zweiten Temperaturbedingung überwacht wird. Dies kann beispielsweise eine Zieltemperatur sein. Alternativ kann die zweite Temperaturbedingung sein, dass der zeitliche Temperaturgradient gleich Null ist, d.h. dass kein weiterer Anstieg der Temperatur mehr vorliegt, wodurch bestimmt wird, dass die Maximaltemperatur im Inneren des Nahrungsmittels erreicht ist. Weiterhin kann auch eine Zeitbedingung vorgegeben werden, beispielsweise eine minimale und/oder maximale Zeit für das Nachgaren.

Insbesondere ist der Temperaturwert der zweiten Temperaturbedingung höher als der Temperaturwert der ersten Temperaturbedingung. Dies ist, wie bereits vorangehend beschrieben, dadurch bedingt, dass ein Ausgleich der inhomogenen Temperaturverteilung nach dem Ende der Wärmezufuhr stattfindet, wodurch der Temperaturwert im Inneren des Nahrungsmittels leicht ansteigt.

In einer Ausführungsform sind auf der Temperaturanzeige verschiedene Garstufen mittels verschiedener Farben und/oder Blinksignalen anzeigbar. Der Begriff Garstufe bezieht sich nicht notwendigerweise auf die gewünschte Endgarstufe, die den Zustand kennzeichnet, mit dem das Nahrungsmittel serviert werden soll. So kann eine Garstufe beispielsweise auch als Zwischengarstufe definiert werden, die während der Zubereitung vorliegt. Zum Beispiel kann vor dem Erreichen einer Zwischengarstufe mit einer gewünschten Temperatur, insbesondere berechnet über einen gewissen Temperaturabstand zur gewünschten Temperatur, oder berechnet über den Temperaturgradient und die Temperatur, eine Zwischengarstufe definiert wird, ab der ein Vorwarnsignal angezeigt wird, das das baldige Erreichen der nachfolgenden Garstufe anzeigt. Weiterhin kann eine mögliche Zwischengarstufe zum Beispiel das Erreichen eines Zustands sein, in dem das Nahrungsmittel nicht mehr weiter erhitzt werden sollte. Ein Zustand, in dem das Nahrungsmittel vollständig nachgegart wurde, und somit zum Verzehr bereit ist, ist gemeinhin als Endgarstufe definiert. Die verschiedenen Garstufen können insbesondere mittels verschiedenfarbigen Leuchten in der Temperaturanzeige angezeigt werden, die gegebenenfalls über mehrere Lichtleiter zu mehreren Statusanzeigen übertragen werden. Alternativ können auch mehrere verschiedenfarbige Leuchten der Temperaturanzeige durch einen Lichtleiter zu einer Statusanzeige übertragen werden, oder ohne Lichtleiter durch eine Statusanzeige wahrnehmbar, insbesondere sichtbar, sein. In anderen Ausführungsbeispielen kann zusätzlich oder alternativ das Erreichen verschiedener Garstufen mittels verschiedenen Blinksignalen angezeigt werden, wobei insbesondere die Frequenz des Blinksignals verändert wird.

So kann ein Anschalten der Vorrichtung durch ein kurzzeitiges schnelles Blinken, beispielsweise ein dreimaliges kurzes schnelles Blinken signalisiert werden. Während der Messung kann der Betriebsmodus des Geräts durch ein langsames Blinken, beispielsweise durch ein Blinkzeichen pro zwei bis zehn Sekunden angezeigt werden. Beim Erreichen einer Vorwarntemperaturbedingung, beispielsweise beim Erreichen einer definierten Temperatur, kann die Frequenz des Blinkzeichens erhöht werden, beispielsweise auf ein Blinkzeichen alle 1,5 Sekunden. Letzteres Blinkzeichen kann entweder ein einfaches Blinken oder ein periodisches, mehrfaches, kurz aufeinander folgendes Blinken sein, beispielsweise ein Doppelblitz.

Sobald die Temperaturbedingung bezüglich der Beendigung der Wärmezufuhr erreicht wird, wird ein hochfrequentes Blinkzeichen ausgegeben, beispielsweise mehr als ein Blinkzeichen pro Sekunde, insbesondere ein Blinkzeichen alle 0,66 Sekunden. Dieses Blinkzeichen wird entweder bis zum Ende der Nachgarphase beibehalten, oder ein zusätzliches etwas langsameres Blinkzeichen wird während der Nachgarphase angezeigt. Das Erreichen der Zieltemperatur wird durch ein weiteres kurzes schnelles Blinken angezeigt, oder durch Beendigung des Blinksignals.

Entsprechend können die verschiedenen Garstufen durch sequentielles Anzeigen verschiedener Farben angezeigt werden.

Gewöhnlicherweise befindet sich die Auswerteeinheit in einem sogenannten "Deep-Sleep-Modus", d.h. bei minimalem Stromverbrauch wird lediglich die Betätigung eines Schalters oder anderen Anschaltemittels überwacht, bevor die Auswerteeinheit aktiviert wird und in einen Betriebszustand übergeht.

In einem Ausführungsbeispiel ist wenigstens die Auswerteeinheit durch das Erhitzen des ersten Gehäuseteils aktivierbar. Dies wird beispielsweise dadurch ermöglicht, dass ein temperaturaktivierbarer Schalter vorgesehen ist, der die Auswerteeinheit aktiviert. Dies kann eine Zweitfunktion des Temperatursensors sein, in anderen Ausführungsbeispielen kann aber auch ein gesondert vorliegender Temperaturschalter vorgesehen sein, der einen geringen Stromverbrauch ermöglicht, wie beispielsweise ein Bimetallschalter. Alternativ kann die Auswerteeinheit durch das Einstecken des ersten Gehäuseteils in das Nahrungsmittel aktiviert werden.

In einer alternativen Ausführungsform ist wenigstens die Auswerteeinheit durch Verschieben oder Verdrehen des zweiten Gehäuseteils bezüglich des ersten Gehäuseteils aktivierbar. Insbesondere kann das Verschieben oder Verdrehen einen Eingriff mit einem Schalter bewirken, oder einen elektrischen Kontakt schließen. Weiterhin ist es möglich, dass durch Druck bei Einschieben des ersten Gehäuseteils in das Nahrungsmittel, der zweite Gehäuseteil bezüglich des ersten Gehäuseteils verschoben wird, sodass eine Aktivierung automatisch herbeigeführt wird.

In einer weiteren alternativen Ausführungsform ist wenigstens die Auswerteeinheit durch einen Magneten aktivierbar. Insbesondere ist dafür ein Reed-Relais vorgesehen, das einen elektrischen Kontakt beim Einwirken eines Magnetfelds schließt oder öffnet.

In weiteren anderen Ausführungsformen weist die Vorrichtung zwei beabstandete elektrisch leitende Bereiche am ersten Gehäuseabschnitt auf, und ist durch die Überbrückung dieser Bereiche mittels der Leitfähigkeit des Nahrungsmittels aktivierbar. Hierbei wird insbesondere der elektrische Widerstand zwischen zwei voneinander elektrisch isolierten Gehäusebereichen bestimmt, der durch die Leitfähigkeit des Nahrungsmittels beim Einstecken des ersten Gehäuseteils in das Nahrungsmittel verringert wird.

Insbesondere können dafür Bereiche des ersten Gehäuseabschnitts, die aus Metall ausgeführt sind, voneinander durch ein isolierendes Element getrennt sein. Das isolierende Element kann beispielsweise ein elektrisch isolierender kurzer Gehäusebereich in Längsrichtung sein, der sich um den gesamten Umfang des ersten Gehäuseteils erstreckt. Weiterhin kann beispielsweise die Spitze des ersten Gehäuseabschnitts vom restlichen ersten Gehäuseabschnitt durch ein isolierendes Element getrennt sein.

In einer weiteren Ausführungsform kann eine Öffnung im ersten Gehäuseabschnitt vorliegen, in der ein isolierendes Element mit einer zentralen Elektrode angeordnet ist, wobei der elektrische Widerstand zwischen der zentralen Elektrode und dem verbleibenden ersten Gehäuseabschnitt bestimmt wird. In allen Fällen sind die voneinander abgesetzten Gehäusebereiche so mit einer Kontrollspannung versorgt, dass die elektrische Überbrückung der Gehäusebereiche durch das Nahrungsmittel bestimmt werden kann, und dann die Auswerteeinheit aktiviert wird, um den Betrieb der Vorrichtung einzuleiten.

Vorteilhafterweise weist der zweite Gehäuseabschnitt wenigstens in einer Richtung orthogonal zur longitudinalen Haupterstreckungsrichtung des ersten Gehäuseabschnitts eine größere Breite auf, als der erste Gehäuseabschnitt. Somit bildet der zweite Gehäuseabschnitt zumindest bereichsweise eine Handhabe, die das Einführen und Abziehen des ersten Gehäuseabschnitts in und aus dem Nahrungsmittel ermöglicht. Die Handhabe kann einen Anschlag für das vollständige Einführen des ersten Gehäuseabschnitts in das Nahrungsmittel bilden. Vorteilhafterweise weist der zweite Gehäuseabschnitt zwei parallel ausgebildete gegenüberliegende Endkanten auf. Diese Endkanten könnten dazu verwendet werden, die minimale Dicke eines Steaks anzuzeigen, indem der zweite Gehäuseabschnitt mit parallel zur Fleischunter- und -oberseite angeordneten Endkanten neben dem Steak angeordnet wird.

Die Statusanzeige kann in einer konkaven Vertiefung der Handhabe angeordnet sein, um sie vor Fleischsaft, Hitze, Fett oder Öl zu schützen.

In einer Ausführungsform ist die Vorrichtung teilbar. Die Teilbarkeit kann insbesondere durch eine Sollbruchstelle oder durch lösbare Verbindungen erreicht werden. Die Teilbarkeit ermöglicht insbesondere, die Stromquelle zu entfernen oder zu ersetzen. Vorteilhafterweise weist die Temperaturanzeige wenigstens eine LED oder ein anderes optoelektronisches Anzeigeelement als Leuchtmittel auf.

Insbesondere sind die Auswerteeinheit und die Temperaturanzeige auf einer gemeinsamen Platine angeordnet. Auf dieser Platine kann weiterhin auch noch der Temperatursensor angeordnet sein. Dies ermöglicht einen kompakten und betriebssicheren Aufbau der elektrischen Schaltung der Vorrichtung.

Vorteilhafterweise besteht zumindest der zweite Gehäuseabschnitt aus einem hitzebeständigen, insbesondere feuerfestem und/oder lebensmittelechten Material, vornehmlich Metall, insbesondere Edelstahl oder eine Titanlegierung. Weiterhin kann auch der erste Gehäuseabschnitt zumindest bereichsweise aus einem derartigen Material geformt sein.

Zusätzlich zur optischen Temperaturanzeige kann auch noch ein akustischer und/oder mechanischer Signalgeber vorgesehen sein, um den Bediener der Vorrichtung auf akustische und/oder haptische Weise das Erreichen einer vorgegebenen Temperaturbedingung mitzuteilen, wobei der Signalgeber die Erfüllung einer vorgegebenen Temperaturbedingung z.B. durch Piepen, Summen, Vibrieren, Blinken, und oder durch eine Kombination solcher Signale meldet.

In einer Ausführungsform ist die wenigstens eine vorgegebene Temperaturbedingung in der Auswerteeinheit einstellbar. Insbesondere können verschiedene Endgarstufen ausgewählt werden. Dafür kann beispielsweise ein Schalter betätigt werden, der zyklisch zwischen verschiedenen Temperaturbedingungen schaltet, oder verschiedene Gehäusebereiche der Vorrichtung können gegeneinander verdreht werden, um die gewünschten vorgegebenen Temperaturbedingungen zuaktivieren.

Erfindungsgemäß wird weiterhin ein Verfahren zum Zubereiten eines Nahrungsmittels durch einen Garvorgang, insbesondere einen Grillvorgang, bereitgestellt. Dabei wird zunächst eine autarke Temperaturerfassungsvorrichtung in das Nahrungsmittel eingeführt, sodass ein erster Gehäuseabschnitt in dem Nahrungsmittel angeordnet ist, wobei wenigstens ein Temperatursensor, eine Auswerteeinheit und eine Temperaturanzeige in dem ersten Gehäuseabschnitt angeordnet sind, während ein zweiter Gehäuseabschnitt aus dem Nahrungsmittel herausragt. In einem nachfolgenden Schritt wird präzise, vornehmlich kontinuierlich die Innentemperatur des Nahrungsmittels durch die Vorrichtung während des Zubereitens, insbesondere während eines Grillvorgangs, gemessen, wozu der erste Gehäuseabschnitt innerhalb des Nahrungsmittels verbleibt. Wenigstens eine Temperaturbedingung wird durch die Auswerteeinheit überprüft, und eine Information wird von der Auswerteeinheit durch die Temperaturanzeige ausgegeben, wobei die Information am zweiten Gehäuseabschnitt wahrnehmbar, insbesondere sichtbar, ist.

Vorteilhafterweise verbleibt lediglich der bezüglich des ersten Gehäuseabschnitts verbreiterte zweite Gehäuseabschnitt außerhalb des Nahrungsmittels. Der zweite Gehäuseabschnitt ist insbesondere als Handhabe ausgebildet. Durch seine Form bildet der zweite Gehäuseabschnitt einen Anschlag, wenn der erste Gehäuseabschnitt voll in das Nahrungsmittel eingeführt wurde.

In einer Ausführungsform, wird anhand der Temperaturbedingung in Abhängigkeit vom Temperaturgradienten und/oder der Temperatur bestimmt, ob ein gewünschter Garzustand erreicht ist. Insbesondere wird die Temperatur an einer Vielzahl von diskreten Zeitpunkten oder kontinuierlich gemessen, wobei die Temperaturbedingung entweder der Vergleich der Temperatur mit einer Grenztemperatur sein kann, oder auch den Temperaturgradienten berücksichtigen kann, der aus dem aktuellen und vorangegangenen Temperaturwerten berechnet werden kann.

In einer Ausführungsform können verschiedene Garstufen mittels verschiedener Farben und/oder mittels verschiedener Blinkgeschwindigkeiten der Temperaturanzeige angezeigt werden.

In einer Ausführungsform wird die Vorrichtung durch das Erhitzen des ersten Gehäuseteils aktiviert. Dafür kann beispielsweise ein elektrischer Kontakt in der Vorrichtung vorgesehen sein, der sich bei Erwärmung durch das Auslenken eines Bimetallelements schließt.

In anderen Ausführungsformen kann die Vorrichtung durch Verschieben oder Verdrehen des zweiten Gehäuseteils bezüglich des ersten Gehäuseteils aktiviert werden.

Weiterhin kann die Vorrichtung durch einen Magneten, insbesondere durch Entnahme der Vorrichtung aus einer mit einem Magneten versehenen Lagerung, aktiviert werden. Schließlich kann die Vorrichtung auch durch elektrische Überbrückung von zwei beabstandeten elektrisch leitenden Gehäusebereichen am ersten Gehäuseabschnitt mittels der Leitfähigkeit des Nahrungsmittels aktiviert werden.

Insbesondere wird dem Bediener der Vorrichtung auf akustische und/oder mechanische Weise das Erreichen einer vorgegebenen Temperaturbedingung bezüglich des Nahrungsmittels signalisiert, z.B. durch Piepen, Läuten, Pfeifen, Summen, Vibrieren und/oder Blinken, bzw. durch eine Kombination von Signalen meldet.

Die vorliegende Erfindung stellt weiterhin eine Vorrichtung zum Erfassen der Innentemperatur eines Nahrungsmittels während der Zubereitung, insbesondere während eines Grillvorgangs, bereit, mit einem Temperatursensor, der im vorderen Ende eines Gehäuses angeordnet ist, das während der Zubereitung im Nahrungsmittel anordbar ist, sowie mit einer Regel- und/oder Auswerteeinheit und einer Temperaturanzeige, wobei sich die Temperaturanzeige zusammen mit der Regel- und/oder Auswerteeinheit als elektronische Bauteile innerhalb des vorderen, ersten Gehäuseabschnitts befindet, der bei der Zubereitung innerhalb des Nahrungsmittels verbleibt, wobei das Nahrungsmittel als Isolierung insbesondere für die elektronischen Bauteile wirkt, und die Temperaturanzeige mit einer die Innentemperatur des Nahrungsmittels signalisierenden, temperaturfesten Statusanzeige verbunden ist, die am hinteren, zweiten Gehäuseabschnitt angeordnet ist, und welche bei der Zubereitung außerhalb des Nahrungsmittels verbleibt.

Die erfindungsgemäße Vorrichtung verfügt in einem vorderen Gehäuseabschnitt nicht nur über den Temperatursensor, sondern auch über eine Regel- und/oder Auswerteeinheit und Temperaturanzeige. Die Regel- und/oder Auswerteeinheit kann dazu benutzt werden, um eine Soll-Temperatur, beziehungsweise einen Soll-Temperaturbereich vorzugeben, die durch die Temperaturanzeige wiedergegeben wird. Letztere ist mit einer Statusanzeige verbunden, die sich vorzugsweise am äußeren, freien Gehäuseabschnitt befindet und dort nicht nur dem Betriebszustand "ein" oder "aus" signalisiert, sondern z.B. auch die Innentemperatur des Nahrungsmittels während der Zubereitung.

Die erfindungsgemäße Vorrichtung kann bei der Zubereitung im Nahrungsmittel verbleiben, der hintere Gehäuseabschnitt ragt aus dem Nahrungsmittel heraus und vermittelt über die Statusanzeige das Maß der Innentemperatur des Nahrungsmittels. Nachdem die Statusanzeige im hinteren Gehäuseabschnitt angeordnet ist, soll sie temperaturfest sein. Dies gilt gemäß einer Weiterbildung auch zumindest für den hinteren Gehäuseabschnitt.

Für den Betrieb des Sensors und/oder der Temperaturanzeige und/oder der Statusanzeige und/oder der Regel- und/oder Auswerteeinheit ist vorteilhafterweise eine Spannungsquelle vorhanden, die auch im vorderen Gehäuseabschnitt angeordnet sein kann. Als Spannungsquelle können übliche Batterien verwendet werden. Um einen Austausch und/oder Wartung dieser Bauteile zu ermöglichen, kann das Gehäuse teilbar sein.

Um die Vorrichtung bzw. deren Gehäuse einfach in das Nahrungsmittel einführen zu können, ist es günstig, wenn das Gehäuse als länglicher, vornehmlich unrunder Körper, zum Beispiel messerartig ausgebildet ist. Die elektrischen/elektronischen Bauteile können sich im Bereich der Messerspitze befinden. Das hintere Gehäuseende kann sowohl beim Einführen der Vorrichtung in das Nahrungsmittel als auch zum Entfernen oder allgemein zur Handhabung eine Handhabe besitzen. Dort kann auch die Statusanzeige angeordnet sein. Diese kann über einen oder mehrere Lichtleiter - zum Beispiel einen Glasleiter - optisch mit der Temperaturanzeige in Verbindung stehen. Letztere kann eine LED oder eine andere optoelektronische Anzeige sein.

Um den Verbleib der erfindungsgemäßen Vorrichtung im Bereich der Zubereitung also innerhalb eines Ofens oder innerhalb von Kochgeschirr bzw. auf einem Grill zu erleichtern, ist es günstig, wenn wenigstens das hintere Gehäuseende aus einem feuerfesten Material, insbesondere Titan besteht. Ist das Gehäuse geteilt, so kann die Trennstelle isoliert gestaltet sein, um den Wärmeübergang vom hinteren Gehäuse auf dem vorderen Gehäuseabschnitt zu unterbinden oder zumindest zu reduzieren.

Das Gehäuse kann als länglicher, z. B. rotationssymmetrischer Körper gestaltet sein. Ebenfalls denkbar sind unrunde Querschnitte, z.B. die Form eines Ovals oder eines flachen Rechtecks.

Die erfindungsgemäße Vorrichtung kann mit einem nicht näher bezeichneten Schalter versehen sein, um den Betriebszustand des Geräts zu bestimmen. Bei einem unrunden Gehäusequerschnitt könnte der Schalter z.B. an einer Trennstelle eines vorderen Gehäuseabschnitts zum rückwärtigen Gehäuseabschnitt angeordnet sein, wobei beim Schalten des Gerätes die Gehäuseabschnitte gegen einander verschwenkt werden und der unrunde Querschnitt eines Gehäuseabschnitts einen gewissen Widerstand vermittelt, der das Schalten erleichtert.

Ein Schalter könnte aber auch dadurch realisiert sein, dass das Gehäuse in sich zusammenschiebbar, beziehungsweise auseinander ziehbar ist und die Distanzveränderung zum Schalten der Vorrichtung benutzt wird. Die eben geschilderten Schaltbewegungen können auch zur Einstellung der Soll-Temperatur verwendet werden.

Die Erfindung wird nachfolgend anhand einer Zeichnung beschrieben. Es zeigen:
- Figur 1: eine Draufsicht auf eine erste Ausführungsform der erfindungsgemäßen Vorrichtung, und
- Figur 2: eine schematische Seitenansicht der Vorrichtung von Figur 1, die in ein auf einem Holzkohlengrill befindliches Nahrungsmittel eingeführt ist,
- Figur 3: zeigt eine seitliche Schnittansicht einer zweiten Ausführungsform der erfindungsgemäßen Vorrichtung, und
- Figur 4: zeigt eine Schnittansicht durch die Schnittebene A-A wie in Figur 3 dargestellt.

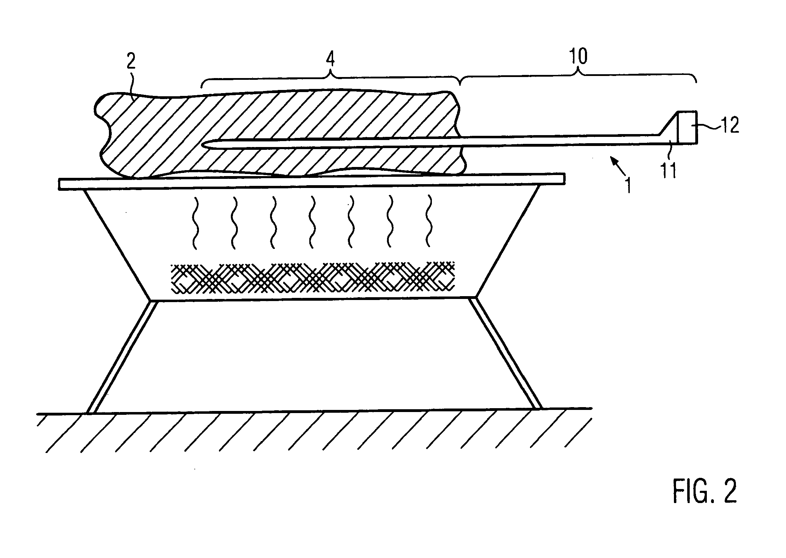

Die erfindungsgemäße Vorrichtung 1 dient zum Erfassen der Innentemperatur eines Nahrungsmittels 2 während der Zubereitung, insbesondere während eines Grillvorganges, der zum Beispiel in Figur 2 dargestellt ist.

Ein Temperatursensor 3 ist in einem vorderen, ersten Abschnitt 4 eines Gehäuses 5 angeordnet. In diesem vorderen Gehäuseabschnitt 4 befindet sich auch eine Regel- und/oder Auswerteeinheit 6, eine Spannungsquelle 7 in Form einer Batterie sowie einer Temperaturanzeige 8. Der Sensor, die Regel- und/oder Auswerteeinheit sowie die Temperaturanzeige sind vorzugsweise als elektrische/elektronische Bauteile ausgebildet, die von der Spannungsquelle 7 versorgt werden.

Die Bauteile sind durch nichtgezeigte Versorgungs- und Datenleitungen miteinander verbunden, eine Ausbildung als Platine oder als Chip ist denkbar.

Die Leitungen sind - ebenso wie die vorgenannten Bauteile - vorzugsweise innerhalb des vorderen Gehäuseabschnitts 4 angeordnet, der bei Zubereitung des Nahrungsmittels innerhalb desselben verbleibt. Auch hier ist es vorteilhaft, dass das Nahrungsmittel während der Zubereitung als Isolierung für diese Bauteile und für die Leitungen wirkt.

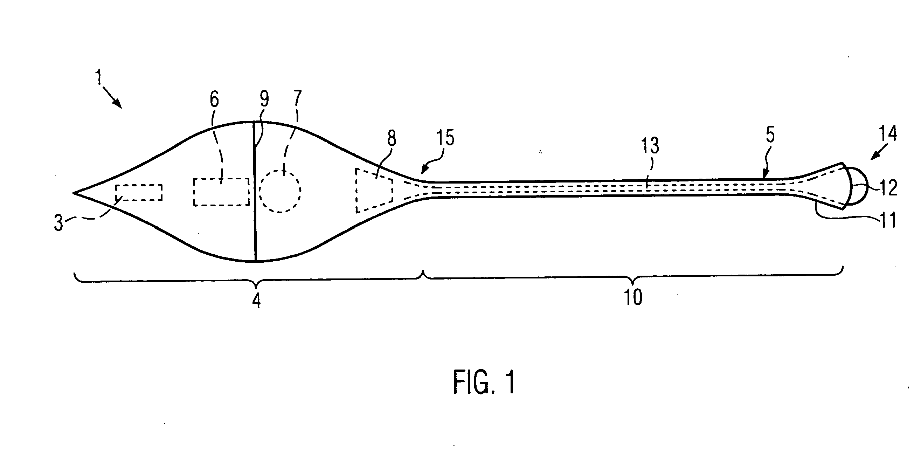

Der vordere Gehäuseabschnitt kann stabförmig, pfeilförmig oder messerartig ausgebildet sein, um das Einführen desselben in das Nahrungsmittel zu erleichtern. In Figur 1 ist der vordere Gehäuseabschnitt lanzettartig gestaltet. Um den Austausch der Batterie 7 bzw. die Wartung der elektronischen Bauteile zu ermöglichen, kann das Gehäuse entlang einer Trennlinie 9 teilbar sein.

Die Teilbarkeit des Gehäuses bietet die Möglichkeit, die verschiedenen Gehäuseabschnitte aus unterschiedlichen Materialien zu fertigen. Dabei kann insbesondere daran gedacht werden, den äußeren Gehäuseabschnitt aus einem vornehmlich temperaturfesten, aber möglicherweise auch isolierenden Werkstoff zu fertigen. An der Trennstelle der Gehäuseabschnitte kann eine Isolierung vorgesehen sein, um den Wärmeübergang zwischen den Gehäuseabschnitten zu reduzieren oder gar zu verhindern.

Das Gehäuse 5 verfügt auch über einen hinteren, zweiten Gehäuseabschnitt 10, der bei der Zubereitung außerhalb des Nahrungsmittels 2 verbleiben kann. Zumindest dieser hintere Gehäuseabschnitt ist aus einem feuerfesten Material, insbesondere Metall, vorzugsweise Titan gefertigt. Natürlich kann das gesamte Gehäuse einheitlich aus einem feuerfesten Material gefertigt sein.

Am rückwärtigen Ende des hinteren Gehäuseabschnitts ist eine Handhabe 11 vorhanden, die das Einführen, aber auch das Entfernen der Vorrichtung aus dem Nahrungsmittel ermöglichen soll. Dort befindet sich auch sichtbar wenigstens eine Statusanzeige 12, die über ein oder mehrere innerhalb des Gehäuses angeordnete Lichtleiter 13 optisch mit der Temperaturanzeige 8 verbunden ist. Die Temperaturanzeige 8 kann beispielsweise als eine oder mehrere LED's ausgebildet sein. Sie und damit auch die Statusanzeige 12 signalisiert den Betriebszustand der Vorrichtung (ein/aus). Weiter kann mit Hilfe der Auswerteeinheit, der Temperaturanzeige 8, aber auch die Statusanzeige 12 durch entsprechende Signale, insbesondere Lichtsignale, die gemessene Innentemperatur des Nahrungsmittels laufend abgebildet werden.

Dies kann entweder durch verschiedene Farben geschehen oder durch Lichtunterbrechungen usw.. Dabei ist es denkbar, nicht nur das Erreichen einer vorgegebenen Soll-Temperatur zu signalisieren, sondern den Temperaturverlauf insgesamt darzustellen.

Dies kann beispielsweise durch die Anordnung von verschiedenen, z.B. nebeneinander angeordneten LED's erfolgen, die jeweils einen Temperaturabschnitt repräsentieren. Auf diese Weise kann der Fortschritt der Zubereitung erkannt und der restliche Zeitraum zum Erreichen der Soll-Temperatur ermittelt werden.

Die Soll-Temperatur kann mit Hilfe der Regel- und/oder Auswerteeinheit voreingestellt sein, beziehungsweise verstellt werden können. Grundsätzlich ist es denkbar, die erfindungsgemäße Vorrichtung z.B. für ein bestimmtes Nahrungsmittel z.B. Grillfleisch voreinzustellen und dementsprechend zu markieren. Auf der anderen Seite ist es auch denkbar, eine Vorrichtung für verschiedene Zubereitungsarten, beziehungsweise für verschiedene Nahrungsmittel variabel einzusetzen und dabei den gewünschten Soll-Temperaturbereich durch Kalibrierung veränderbar zu halten.

Der oder die Lichtleiter 13 erstrecken sich vornehmlich von der Temperaturanzeige 8 bis zum freien Ende des hinteren Gehäuseabschnitts 10 und ragen dort beispielsweise sichtbar über diesen hinaus. Der hintere Gehäuseabschnitt kann stabförmig gestaltet sein und von seinen Abmessungen her eine erheblich dünnere Form haben als der vordere Gehäuseabschnitt 4.

Die Vorrichtung verfügt in der gezeigten Ausführung über einen Schalter 15 zum In- und Außerbetriebsetzen der Bauteile des Geräts. Der Schalter befindet sich bei der gezeigten Ausführungsform zwischen dem Lichtleiter 13 und der Temperaturanzeige 8. Er kann dadurch betätigt werden, dass die Statusanzeige 12 innerhalb des Gehäuses verdreht wird, beziehungsweise in Längsrichtung des Gehäuses 5 verschoben wird.

Insbesondere am hinteren Gehäuseabschnitt 10 kann auch ein akustischer und/oder optischer Signalgeber 14 vorhanden sein, der in Zusammenarbeit mit der Temperaturanzeige 8 das Erreichen einer gewünschten Temperatur des Nahrungsmittels akustisch oder z.B. durch Vibrieren signalisiert. Das Erreichen der vorgegebenen Soll-Temperatur kann durch akustische Signale, z.B. Piepen, Summen, Blinken oder auch durch mechanische Signale, z.B. Vibrieren angegeben werden.

Die erfindungsgemäße Vorrichtung ist einfach aufgebaut und einfach zu Bedienen. Sie wird vor Beginn der Zubereitung mit dem vorderen Gehäuseabschnitt 4 in das Nahrungsmittel eingeführt und verbleibt während der Zubereitung in diesem. Mit Hilfe des Schalters 15 wird das Gerät in Betrieb gesetzt. Mittels der Regel- und/oder Auswerteeinheit 6 wird eine gewünschte Soll-Temperatur vorbestimmt. Der Temperatursensor 3 misst während der Zubereitung fortlaufend die Temperatur. Die Auswerteeinheit 6 übermittelt Signale des Sensors 3 an die Temperaturanzeige 8, die z.B. durch einen oder mehrere Lichtleiter den Temperaturwert an die Statusanzeige 12 weitergibt.

Der äußere Gehäuseabschnitt 10 verbleibt während der Zubereitung außerhalb des Nahrungsmittels, wie dies in Figur 2 gezeigt ist. Zumindest dieser Gehäuseabschnitt ist aus hochfestem Material gefertigt, so dass dieser Gehäuseabschnitt, aber auch die in ihm befindlichen Teile der Vorrichtung temperaturfest sind. Beim Erreichen der gewünschten Soll-Temperatur kann die Zubereitung des Nahrungsmittels abgebrochen werden, die Vorrichtung wird aus dem Nahrungsmittel entfernt und abgeschaltet.

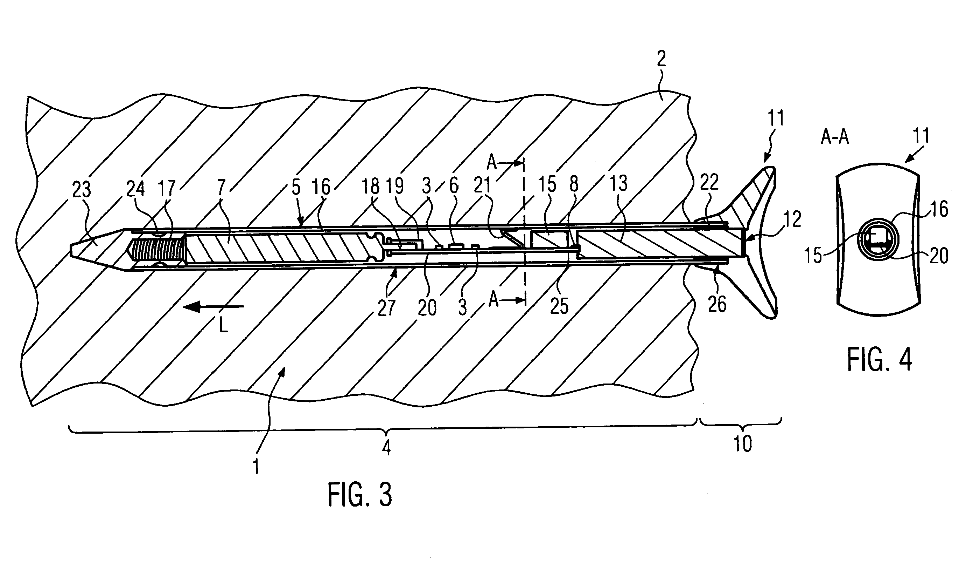

In Figur 3 ist eine zweite Ausführungsform der erfindungsgemäßen Vorrichtung 1 in Schnittansicht dargestellt. Entsprechende Teile sind mit den gleichen Bezugszeichen versehen. Die erfindungsgemäße Vorrichtung 1 weist einen vornehmlich zylindrischen Gehäusequerschnitt auf, wobei am vorderen Ende des Gehäuses 5 eine konisch zulaufende Spitze 23 und am hinteren Ende eine Handhabe 11 vorhanden ist. Letzere weist orthogonal zur Längserstreckungsrichtung 11 eine erhöhte Breite auf. Die Spitze 23 und die Handhabe 11 können separat ausgebildet und insbesondere mittels einer Presspassung mit dem Rohr 16 verbunden sein, wobei in alternativen Ausführungsformen auch eine Gewindeverbindung, Klebeverbindung oder Ähnliches vorgesehen sein kann.

Die Vorrichtung wird mit der Spitze 23 voran in ein Nahrungsmittel 2, insbesondere in Form eines Steaks, eingeführt, und soweit hineingedrückt, dass ein Großteil des Rohrs 16 oder das gesamte Rohr 16 innerhalb des Nahrungsmittels 2 angeordnet ist. Lediglich ein hinterer Bereich der Vorrichtung 1 - bezeichnet als zweiter Gehäuseabschnitt 10 - steht aus dem Nahrungsmittel 2 hervor, während ein vorderer Bereich der Vorrichtung 1 - bezeichnet als erster Gehäuseabschnitt 4 - im Nahrungsmittel 2 angeordnet ist.

Der erste und zweite Gehäuseabschnitt 4, 10 sind nicht zwangsläufig durch unterschiedliche Bauelemente des Gehäuses definiert, sondern lediglich durch die Eindringtiefe. Generell gilt aber, dass die Handhabe 11 im Wesentlichen den zweiten Gehäuseabschnitt 10 bildet, da sie zumindest größtenteils außerhalb des Nahrungsmittels 2 verbleibt. Die Handhabe 11 bildet insbesondere einen Anschlag, der mit dem Nahrungsmittel in Anlage kommt, wenn die Vorrichtung 1 in das Nahrungsmittel eingeführt wurde. Das Gehäuserohr 16, und in manchen Ausführungsformen auch die Handhabe 11 und/oder die Spitze 23, sind aus lebensmittelechtem Edelstahl ausgeführt, um die notwendige Beständigkeit bezüglich Wärme, Reinigungsmitteln und mechanischer Belastung aufzuweisen.

Am zweiten Gehäuseabschnitt 10 ist eine Statusanzeige 12 vorgesehen, die für den Benutzer wahrnehmbare, insbesondere sichtbare Informationen bezüglich wenigstens eines Garzustandes, insbesondere Informationen bezüglich verschiedenen vorgegebenen Temperaturbedingungen wiedergibt. Insbesondere wird die Statusanzeige 12 durch eine Öffnung im hinteren Bereich der Handhabe 11 gebildet. Diese Öffnung ist vornehmlich konzentrisch mit dem Rohr 16 ausgebildet. Die Öffnung für die Statusanzeige 12 kann insbesondere durch ein transparentes oder transluzentes Fenster abgedeckt sein. Alternativ kann die gesamte Handhabe 11 als transluzentes oder transparentes Element ausgebildet sein.

Die Statusanzeige 12 ermöglicht somit, dass ein Signal, z.B. ein Licht-, Schall- oder haptisches Signal, von einer sich im ersten Gehäuseabschnitt 4 befindlichen Temperaturanzeige 8, in den zweiten Gehäuseabschnitt 10 übermittelt wird, und außerhalb des Nahrungsmittels 2 wahrnehmbar ist.

Beispielsweise kann die Temperaturanzeige 8 aus einem Schallgeber, insbesondere einem Piezoschallgeber, bestehen, oder einen Schallgeber umfassen. Dessen akustisches Signal kann durch einen in den Figuren nicht dargestellten Schallleiter durch den ersten Gehäuseabschnitt 4 und über den zweiten Gehäuseabschnitt 10 aus dem Nahrungsmittel 2 herausgeleitet werden, sodass es gut hörbar ist.

Damit ist es möglich, eine autarke Vorrichtung 1 zum Erfassen der Innentemperatur des Nahrungsmittels 2 zu schaffen, die während der Zubereitung im Nahrungsmittel 2 verbleiben kann, da eine Erhitzung des zweiten Gehäuseabschnitts 10 unkritisch ist, und der erste Gehäuseabschnitt 4 innerhalb des Nahrungsmittels 2 angeordnet ist, und so durch das Nahrungsmittel 2 vor übermäßig hohen Temperaturen geschützt wird. Die Autarkie der Vorrichtung bedeutet, dass es im Gegensatz zu anderen Vorrichtungen zur kontinuierlichen Erfassung der Innentemperatur eines Nahrungsmittels nicht notwendig ist, dass die Vorrichtung mit einem Ofen oder einem separaten davon abgesetzten Anzeigemittel kombiniert wird, um eine Temperaturüberwachung zu ermöglichen. Insbesondere weist die autarke Vorrichtung eine eigene Spannungsquelle und eine eigene Anzeige auf, und benötigt somit weder eine Datenleitung und separate Anzeige, noch ein Versorgungskabel. Weiterhin weist die autarke Vorrichtung eine Auswerteeinheit auf, die eine Temperaturbedingung überwachen kann.

Insbesondere kann die Vorrichtung 1 zusätzlich zur Temperatur- und/oder Statusanzeige noch ein Sendemittel aufweisen, mit dem Informationen, insbesondere die Temperatur und/oder die Temperaturbedingung, die von der Auswerteeinheit 6 bestimmt wurden, an eine separate Anzeigevorrichtung übermittelt werden können. Damit ist nicht nur die Darstellung der Temperaturbedingung am zweiten Gehäuseabschnitt 10, sondern auch eine Darstellung dieser und weiterer Informationen auf einer weiteren Anzeigevorrichtung möglich, die z.B. außerhalb eines Grills angeordnet ist. Auf dieser Anzeigevorrichtung kann auch noch weitergehende Information wiedergegeben werden, wie z.B. die verbleibende Zubereitungszeit, die Ist-Temperatur, die Soll-Temperatur, usw. Dennoch ist die Vorrichtung auch ohne Sendemittel und die externe Anzeigevorrichtung autark einsetzbar.

Im Folgenden wird der innere Aufbau der Vorrichtung 1 anhand von Figur 3 beschrieben. Am vorderen Ende der Vorrichtung 1 in der Richtung L der Vorrichtung 1 ist die Spitze 23 vorgesehen, die an ihrem rückwärtigen Ende einen nach Maß der Wandstärke des Rohres 16 zurückgesetzten Bereich aufweist, der mittels einer Presspassung in das Innere des Rohres 16 eingepresst ist. Um die nötige Nachgiebigkeit für die Presspassung zu ermöglichen, ist dieser Bereich insbesondere hohlzylindrisch ausgeführt, und kann weiterhin eine außenliegende Nut 24 in Umfangsrichtung aufweisen.

Eine Feder 17 ist innerhalb der Spitze 23 in einem Überlappungsbereich mit dem Rohr 16 angeordnet, wobei sich die Feder 17 insbesondere in den hohlzylindrischen Bereich der Spitze 23 erstreckt. Sie verspannt einerseits die sequentiell in Längserstreckungsrichtung L im Inneren des Rohres 16 angeordneten Bauteile miteinander, und andererseits stellt sie einen definierten elektrischen Kontakt zwischen einer Spannungsquelle 7 und der Spitze 23 beziehungsweise dem Rohr 16 her. Die Spannungsquelle 7 ist z.B. eine Batterie, die insbesondere einen Außendurchmesser aufweist, der im Wesentlichen dem Innendurchmesser des Rohres 16 entspricht, sodass die Batterie vornehmlich passgenau in das Rohr 16 eingeführt werden kann. Insbesondere wird als Spannungsquelle 7 eine Lithium-Ionen-Batterie vorgeschlagen, die vorteilhafterweise eine Kapazität von ungefähr 25 mAh bis ungefähr 50 mAh aufweist. Die gesamte Umfangsfläche der Batterie 7, sowie deren vordere Endfläche in Richtung der Spitze 23 bilden den Pluspol der Batterie, sodass ein Kontakt mit der Innenwand des Rohres 16 und über die Feder 17 mit der Spitze 23 gebildet wird.

An ihrem gegenüberliegenden, rückwärtigem Ende weist die Batterie 7 einen vorstehenden elektrischen Stiftkontakt 18 auf, der den Minuspol bildet. Auf diesen ist ein Klemmkontakt 19 einer Platine 20 aufgesteckt. Somit wird eine elektrische Verbindung zwischen der Spannungsquelle 7 und der Platine 20 ermöglicht, wobei Letztere zusätzlich noch durch den Stiftkontakt 18 gelagert ist.

Dafür ist der Stiftkontakt vornehmlich zentral bezüglich des Rohres 16 und der Spannungsquelle 7 angeordnet, sodass auch der Klemmkontakt 19 der Platine 20 im Wesentlichen zentral im Rohr 16 gelagert ist. Die elektrische Anbindung der Platine 20 an den Pluspol der Spannungsquelle 7 wird durch einen auf der Platine 20 vorgesehenen elastischen elektrischen Kontakt 21 ermöglicht, der die Platine 20 mit dem Rohr 16 verbindet. Das Rohr 16 steht entweder über die Spitze 23 und die Feder 17 und/oder direkt über die Umfangsfläche der Spannungsquelle 7 mit dem Pluspol in Verbindung. Der elektrische Kontakt 21 ist insbesondere als radial nach außen elastisch vorgespanntes, metallisches Kontaktelement ausgebildet.

Wie in der Schnittansicht A-A in Figur 4 gesehen werden kann, liegt die Platine 20 mit ihren Seitenwänden an der Innenwand des Rohres 16 an, wobei über diese mechanische Verbindung normalerweise kein elektrischer Kontakt vorgesehen ist.

Auf der Platine 20 sind eine Vielzahl von elektronischen und elektrischen Bauelementen angeordnet, die im Folgenden erläutert werden. Zunächst befindet sich darauf zumindest ein Temperatursensor 3, der im Wesentlichen in Seitenrichtung zentral positioniert ist, um die Temperatur des Gehäuses vornehmlich durch Wärmeleitung über das Rohr 16, auf die Platine 20 hin zum Temperatursensor 3 zu erfassen. Um die Temperaturübertragung vom Gehäuse 5 zur Platine 20, d.h. vom Rohr 16 zur Platine 20, verbessern zu können, kann insbesondere die am Rohr anliegende Seitenfläche der Platine 20 mit Kupfer beschichtet sein. Dadurch, dass das Material des Rohrs 16 vornehmlich eine geringere Wärmeleitfähigkeit hat als das an und in der Platine vorgesehene Material, insbesondere Kupfer, wird verhindert, dass lokale Temperaturspitzen am Rohr 16 durch den Temperatursensor 3 ermittelt werden, was zu einer fehlerhaften Messung führen könnte.

Vielmehr findet eine integrale Temperaturmessung über einen Bereich des Gehäuses statt, da das Rohr 16 eine gewisse Verzögerung und einen Ausgleich der an ihm anliegenden Temperaturen ermöglicht. Die an einem Bereich des Gehäuses vorliegenden Temperaturen werden aber durch die relativ gute Leitfähigkeit der Platine 20, insbesondere durch die Kupferbeschichtung, dem Temperatursensor 3 zugeführt. Ein mögliches Material für das Rohr 16 mit einer geeigneten geringeren Temperaturleitfähigkeit als Kupfer ist beispielsweise Edelstahl oder Kunststoff.

Weiterhin kann auch noch ein weiterer, vom ersten Temperatursensor in Längsrichtung L abgesetzter Temperatursensor 3 vorgesehen werden, damit die integrale Temperaturmessung über einen noch größeren Bereich des Gehäuses, d.h. des Rohrs 16, möglich ist. Der wenigstens eine Temperatursensor 3 kann als temperaturveränderlicher elektrischer Widerstand ausgebildet sein, der in einer Widerstandsbrückenschaltung eingebunden sind, sodass durch die Veränderung seines Widerstandes aufgrund einer Temperaturänderung, eine unterschiedliche Spannung an ihmoder an einem konstanten Vergleichswiderstand abgegriffen werden kann.

Der zumindest eine Temperatursensor 3 kann mit dem Analogeingang eines digitalen Mikrocontrollers verbunden sein, der vorzugsweise die Auswerteeinheit 6 bildet. Die Auswerteeinheit 6 misst vornehmlich kontinuierlich in diskreten Abständen die an ihrem Analogeingang anliegende Spannung, wandelt diese in ein digitales Signal, und speichert beziehungsweise wertet die gemessene Temperatur in einer Temperaturbedingung aus. Insbesondere können vorhergehende Temperaturwerte in der Auswerteeinheit 6 gespeichert werden, um einen Temperaturverlauf zu ermitteln, oder um den Gradienten der Temperaturentwicklung zu bestimmen. In der Auswerteeinheit 6 ist zumindest eine Temperaturbedingung hinterlegt, deren Erreichen bedingt, dass die Auswerteeinheit 6 über eine Temperaturanzeige 8, z.B. in Form einer LED, ein Signal ausgibt.

Die Temperaturanzeige 8 ist insbesondere an einem in Längserstreckungsrichtung L rückwärtigen Ende 25 der Platine 20. Somit ist das von der Temperaturanzeige 8 abgestrahlte Lichtsignal zumindest teilweise in Richtung des zweiten Gehäuseabschnitts 10 gerichtet, und somit an diesem, insbesondere über die Statusanzeige 12 sichtbar.

Um die Sichtbarkeit des Lichtsignals zu verbessern, d.h. das von der Temperaturanzeige 8 erzeugte Licht besser in Richtung der Statusanzeige zu leiten, kann insbesondere ein Lichtleiter 13, z.B. in Form eines Glaselements, vorgesehen sein. Der Lichtleiter 13 ist im Wesentlichen zylindrisch ausgeführt und weist einen Durchmesser auf, der geringfügig kleiner ist als der Innendurchmesser des Rohres 16. Um den Lichtleiter 13 im Rohr zu befestigen, ist nahe oder am Ende des Rohres 16 ein Dicht- beziehungsweise Halteelement 22 zwischen dem Lichtleiter 13 und dem Rohr 16 vorgesehen. Das Dicht- beziehungsweise Halteelement 22 weist die Doppelfunktion auf, den Lichtleiter zu lagern, und das Eindringen von Flüssigkeit in das Rohr 16 zu verhindern. Die Lagerung des Lichtleiters 13 im Dicht- und Halteelement ist insbesondere eine Kraglagerung, wobei das vordere Ende des Lichtleiters 13 nur an die Platine beziehungsweise an das Leuchtelement 8 ansteht. Das hintere Ende des Lichtleiters B bildet die Statusanzeige 12.

Auf der Platine ist weiterhin ein Schalter 15 angeordnet, der eine Aktivierung wenigstens der Auswerteeinheit 6, und damit eine Aktivierung der von der Auswerteeinheit abgelesenen, beziehungsweise angesteuerten elektronischen, und elektrischen Bauteile, nämlich des wenigstens einen Temperatursensors 3 und der Temperaturanzeige 8 ermöglicht. Der Schalter 15 ist insbesondere als Reed-Relais ausgeführt, sodass ein Vorbeiführen eines Magneten an der Vorrichtung 1 im Bereich des Schalters 15 eine Aktivierung des Schalters 15 ermöglicht.

Die Montage der erfindungsgemäßen Vorrichtung gemäß Figur 3 erfolgt wie folgt. Zunächst wird die Spitze 23 in das Rohr 16 eingepresst, und die Feder 17 durch das hintere Ende des Rohrs 16 eingeführt. Dann wird die Spannungsquelle 7 zusammen mit der auf ihr aufgesteckten Platine 20 in das Rohr 16, und schließlich der Lichtleiter 13 zusammen mit dem Dicht- und Halteelement 22 eingebracht. Dadurch werden die einzelnen Bauteile bis zum vorderen Ende des Rohres an die Spitze 23 verschoben, wobei sie durch die Feder 17 miteinander in Kontakt gehalten werden. Schließlich wird die Handhabe 11 auf das rückwärtige Ende des Rohrs 16 aufgepresst, sodass die Bauteile innerhalb des Rohres 16 fixiert werden. Insbesondere kann dafür die Handhabe 11 eine zylindrische Ausnehmung 26 aufzuweisen, die den hinteren Teil des Lichtleiters 13 aufnimmt, und die im Bereich der Statusanzeige 12 einen Begrenzungsflansch bildet, um zu verhindern, dass der Lichtleiter 13 durch eine Öffnung für die Statusanzeige 12, austreten kann. Alternativ kann die Handhabe 11 mit einem transparenten oder transluzenten Bereich versehen sein, sodass die Handhabe 11 das Rohr 16 am hinteren Ende abschließt, und sich das Dicht- und Halteelement 22 hinsichtlich der Dichtwirkung erübrigt.

Die elektrische Schaltung der erfindungsgemäßen Vorrichtung 1 in dieser Ausführungsform kann insbesondere wie folgt aufgebaut sein. Die Batterie 7 ist mit einem Versorgungseingang der Auswerteeinheit 6 in Form eines Mikrocontrollers verbunden. Zusätzlich ist an dieser Verbindung ein Kondensator angeordnet, der mit der Masse verbunden ist, um hochfrequente Störsignale auszufiltern. Der Schalter 15 in Form eines Reed Relais ist über einen Kondensator an einem Schalteingang des Mikrocontrollers angeschlossen, der den Mikrocontroller aus einem "Deep-Sleep-Modus" weckt und somit in Betrieb setzt.

Die Versorgungsspannung für den Schalter 15 wird über einen Widerstand von der Batterie 7 gewährleistet. Der Temperatursensor 3 ist als temperaturveränderlicher Widerstand ausgebildet und mit einem konstanten Widerstand in Form eines Spannungsteilers zusammengeschaltet. Die am Spannungsteiler abgegriffene veränderliche Spannung ist mit einem Analogeingang des Mikrocontrollers verbunden, und wird über einen A/D-Wandler im Mikrocontroller in ein digitales Signal umgewandelt. In digitalen Sampling-Abständen wird das Temperatursignal vom Temperatursensor durch den Mikrocontroller 5 bestimmt, und in einer Temperaturbedingung ausgewertet, wobei je nach erreichter Temperaturbedingung ein Ausgang des Mikrocontrollers 6 einen entsprechenden Versorgungsstrom über einen Vorwiderstand an eine Leuchtdiode ausgibt, die die Temperaturanzeige 8 bildet.

Das Erreichen der Temperaturbedingungen, beziehungsweise das Erreichen von verschiedenen Temperaturbedingungen, Zeitbedingungen oder Betriebsbedingungen kann durch ein entsprechendes Signal der Temperaturanzeige 8, insbesondere durch ein Blinken der die Temperaturanzeige 8 bildenden LED dargestellt werden. So kann zum Beispiel eine Betätigung des Reed-Relais 5 durch ein kurzes höherfrequentes Blinken oder ein geeignetes anderes Signal, z.B. ein akustisches Signal, angezeigt werden, sodass der Benutzer weiß, dass die Vorrichtung 1 nun betriebsbereit ist. Dann findet ein langsames Blinken, oder akustisches Signal, statt, das die kontinuierliche Erfassung der Innentemperatur des Nahrungsmittels anzeigt. Sobald eine Vorwarntemperatur erreicht wird, wird das Blinken, oder das akustische Signal, in seiner Frequenz erhöht. Wenn eine vorgegebene Temperatur erreicht wurde, die eine Abschaltung der Hitzezufuhr erfordert, wird ein hochfrequentes Blinken, oder akustisches Signal, ausgelöst, woraufhin der Benutzer das Nahrungsmittel nicht weiter erwärmt und die Hitzezufuhr ausschaltet.

In einer sogenannten Nachgarzeit gleicht sich nun die Temperatur im Nahrungsmittel 2 aus, wobei insbesondere die Innentemperatur bei diesem Vorgang noch weiter ansteigen kann. Sobald die gewünschte Innentemperatur erreicht wird, wird das hochfrequente Blink- oder akustische Signal abgestellt, und der Benutzer erkennt somit, dass das Nahrungsmittel nun fertig zubereitet ist. Alternativ oder zusätzlich zur Bestimmung der Nachgarzeit mittels einer Temperaturbedingung kann auch eine Zeitbedingung festgesetzt werden. So kann insbesondere eine Mindestzeit für die Nachgarzeit bestimmt werden, insbesondere wenn die Temperatur, die am Ende der Nachgarzeit vorliegen sollte, bereits überschritten wurde. Weiterhin kann auch eine maximale Zeit für die Nachgarzeit bestimmt werden, nach der ein Ende der Nachgarzeit angezeigt wird, selbst wenn die gewünschte Temperatur in der Nachgarzeit nicht erreicht wurde.

Insbesondere kann die Handhabe 11 im Bereich der Statusanzeige konkav ausgeführt sein, sodass die Handhabe 11 das Licht oder andere Signale, beispielsweise ein akustisches Signal, reflektiert, und somit das auf der Statusanzeige wiedergegebene Signal besser wahrnehmbar ist.

Die Vorrichtung 1 kann im mittleren Bereich des Rohrs 16 eine Sollbruch- oder Trennstelle 27 aufweisen, um eine Entnahme der Batterie 7 bei der Entsorgung der Vorrichtung 1 zu ermöglichen. Diese Stelle 27 kann insbesondere durch eine eingedrehte Kerbe ausgeführt sein. Alternativ kann die Handhabe 11 oder die Spitze 23 entfernbar auf dem Rohr befestigt sein, sodass die Batterie 7 entnommen beziehungsweise ausgetauscht werden kann.

Weiterhin kann die Spitze 23 in ihrem in das Rohr 16 eingebrachten Abschnitt eine Nut 24 aufweisen, die mit einem entsprechenden Rastelement im Rohr 16 ein Einrasten der Spitze 23 ermöglicht, sodass die Spitze 23 im Rohr 16 gesichert wird.

Bei der Bestimmung der Temperaturbedingungen kann insbesondere die Temperatur und zusätzlich der Temperaturgradient berücksichtigt werden, da letzterer Aufschluss über die zeitliche Entwicklung der Temperatur gibt. Bei einem hohen Temperaturgradienten ist eine hohe Erwärmungsgeschwindigkeit anzunehmen, sodass davon ausgegangen werden kann, dass in den äußeren Bereichen des Nahrungsmittels eine erheblich höhere Temperatur vorliegt, als im inneren Bereich, sodass selbst wenn die Wärmezufuhr abgeschaltet wird, durch Wärmekonduktion im Nahrungsmittel noch eine weitere Erhöhung der Temperatur im Inneren des Nahrungsmittels stattfindet. Somit kann die Temperaturbedingung bezüglich eines Wertes bestimmt werden, der einer gewichteten Summe aus der Temperatur und dem Temperaturgradienten entspricht.

Insbesondere kann die wenigstens eine Temperaturbedingung durch den Benutzer verstellt werden. Dafür ist es beispielsweise möglich, eine mehrfache Betätigungsmöglichkeit des Schalters 15 vorzusehen, wobei zyklisch durch verschiedene Temperaturbedingungen geschaltet wird. Alternativ kann eine Einstellung der Temperaturbedingung durch ein Verdrehen oder Verschieben von Gehäuseteilen der Vorrichtung zueinander erfolgen.

Die magnetische Aktivierung des Schalters 15 in Form eines Reed-Relais kann insbesondere dadurch erfolgen, dass in einem Aufbewahrungsmittel ein Magnet integriert ist, sodass beim Entnehmen der Vorrichtung aus dem Aufbewahrungsmittel die Vorrichtung automatisch aktiviert wird. Insbesondere kann das Aufbewahrungsmittel eine Box, eine Halterung oder eine Tasche sein.

Alternativ zu einem Reed-Relais als Schalter 15 kann auch eine Feder aus einem Formgedächtnismaterial vorgesehen werden (zum Beispiel Nitinol), die sich beim Erhitzen stark ausdehnt, und somit einen Kontakt schließt. Dies kann zum Beispiel dadurch geschehen, dass die entsprechende Feder den Lichtleiter 13 verschiebt. Alternativ kann auch ein Bimetallstreifen vorgesehen werden, der bei Erwärmung einen Kontakt schließt.

Alternativ zu den vorangehend beschriebenen Schaltern 15 kann auch ein Infrarotsensor vorgesehen sein, der durch Hitze erzeugte Infrarotstrahlung geschaltet wird. Solche Sensoren eignen sich vor allem für Grillanwendungen. Die Infrarotschaltung kann insbesondere auch durch den Lichtleiter zum Schalter übertragen werden.

Als Schalter 15 kann auch ein Vibrationsschalter vorgesehen werden, sodass die Vorrichtung durch leichtes Schütteln aktiviert werden kann.

Wenn das Gehäuse 5 der Vorrichtung aus Kunststoff ausgeführt ist, kann insbesondere im Bereich des wenigstens einen Sensors 3 und im zweiten Gehäuseabschnitt lokal dennoch ein Gehäuseabschnitt aus Metall vorliegen, der die nötige Hitzebeständigkeit, beziehungsweise die gewünschte Wärmeleitfähigkeit, bereitstellt.

Sofern mehrere Temperatursensoren in der Vorrichtung vorgesehen sind, kann es vorteilhaft sein, die Sensoren 3 jeweils abwechselnd der Ober- und der Unterseite der Vorrichtung zuzuordnen, um eine möglichst aussagekräftige Temperaturmessung zu gewährleisten.

Vorteilhafterweise wird die Vorrichtung fest für eine Endgarstufe eingestellt, wobei insbesondere verschiedene Vorrichtungen für verschiedene Endgarstufen ausgelegt werden können. Allerdings ist es auch möglich, dass die Temperaturanzeige beim Durchschreiten von verschiedenen Garstufen, zum Beispiel für Endgarstufen "Rare" bis "Well Done", jeweils pro Endgarstufe die Farbe wechselt, sodass mit nur einer Vorrichtung verschiedene Endgarstufen zubereitet werden können.

Die Geometrie der Handhabe 11 kann insbesondere ermöglichen, dass die Handhabe mit einem Abzieher ergriffen werden kann, d.h. mit einem mechanischen Element, das ein Abziehen der Vorrichtung aus dem Nahrungsmittel ermöglicht, selbst wenn die Vorrichtung aufgrund ihrer Temperatur durch den Benutzer nicht direkt ergriffen werden kann.

Insbesondere kann die gesamte Handhabe aus einem Lichtleiter geformt sein, zum Beispiel aus Glas. Dieses Glas kann entweder transparent oder transluzent ausgestaltet sein, d.h. entweder Klarglas oder Milchglas.

In einer Ausführungsform kann das gesamte Innere der Vorrichtung mit einem insbesondere lebensmittelechten Polymer ausgegossen sein, sodass die darin enthaltenen Bestandteile in ihrer Position festgelegt sind. In anderen Ausführungsformen sind die Bauelemente in der Vorrichtung lediglich sequentiell in das Rohr eingeführt, wobei keine zusätzlichen Befestigungsmittel notwendig sind. Für den Lichtleiter eignet sich insbesondere Borsilikatglas. Das Dicht- und Halteelement 22 kann aus einem vorgeformten Elastomermaterial ausgeführt sein. Das Dicht- und Haltelement 22 kann auch durch ein gieß- bzw. spritzbares Polymermaterial gebildet werden, zum Beispiel durch lokales Vergießen, bzw. Verspritzen mit Polycarbonat. Weiterhin kann das Dicht- und Halteelement auch durch einen Zwei-Komponenten-Keramikkleber auf lebensmittelechter Natriumsilikatbasis gebildet werden.

Für die Batterie 7 ist insbesondere eine Lithium-CFx, Lithium oder Lithium-MnO₂-Batterie vorgesehen.

Die Temperaturanzeige 8 wird insbesondere durch eine LED gebildet, die bei 5 bis 20 mA Versorgungsstrom eine Helligkeit von 140 bis 180 Mikrocandela aufweist. Insbesondere können mehrere verschiedenfarbige LED's nebeneinander auf der Platine angeordnet sein, wobei das von den LED's abgestrahlte Lichtsignal jeweils in den gleichen oder in unterschiedliche Lichtleiter eingespeist wird.

Der Durchmessers des Rohrs 16 ist insbesondere 4 bis 8 mm, und vorteilhafterweise 5,6 bis 7 mm. Das Rohr weist eine Wandstärke von circa 0,1 mm bis circa 0,5 mm auf. Vornehmlich sind dickere Wandstärken für Polymermaterialien notwendig, Titanlegierungen ermöglichen eine sehr dünne Ausgestaltung der Rohrwand. Die Gesamtlänge der Vorrichtung ist zwischen 60 und 120 mm, vorteilhafterweise zwischen 80 und 100 mm. Alternativ zu einem kreisförmigen Querschnitt des Rohrs 16 können auch rechteckige, quadratische oder andere Querschnittsformen eingesetzt werden.

Der Lichtleiter 13 ist gewöhnlicherweise ein zylindrisches Element. In manchen Ausführungsformen kann der Lichtleiter 13 aber konisch zulaufen oder trompetenförmig aufgeweitet werden, sodass unterschiedlichen Platz- und Lichtintensitäterfordernissen Rechnung getragen werden kann. Insbesondere kann der Lichtleiter im Bereich der Statusanzeige aufgeweitet werden, um eine größere Statusanzeige zu ermöglichen. Der Lichtleiter kann insbesondere in ein aufgeweitetes Ende des Rohrs 16 eingesetzt werden und dieses vollständig und abdichtend ausfüllen. In diesem Fall bildet der aufgeweitete Teil des Rohrs 16 eine Handhabe 11, und eine zusätzlich anzubringende Handhabe kann entfallen. Zwischen dem Lichtleiter und dem Ende des Rohrs ist dann eine Dichtung, insbesondere in Form eines abdichtenden Klebstoffes oder eines Dichtrings eingebracht. Alternativ kann der Lichtleiter über das Rohr 16 hinaus überstehen und konisch aufgeweitet sein, sodass der Lichtleiter die Handhabe bildet. Der Lichtleiter kann durch Verkleben, durch einen Dichtring und/oder durch Clips befestigt werden.

In der vorbeschriebenen Ausführungsform wird die Wärme zum Temperatursensor vornehmlich über die Platine, aber auch über die Luft im Hohlraum um die Platine, geleitet. Alternativ kann allerdings auch noch ein Kontaktelement, zum Beispiel in Form eines wärmeleitenden Pads oder einer wärmeleitenden Klammer, vorteilhafterweise aus Kupfer, zwischen dem Temperatursensor und dem Rohr vorgesehen sein.

Auf dem Gehäuse kann insbesondere die Lage des Temperatursensors und/oder die Lage einer möglichen Sollbruchstelle 27 markiert sein, um die Benutzung beziehungsweise Entsorgung der Vorrichtung zu erleichtern.

Die Vorrichtung ist ausgelegt, dass wenn sie unbeabsichtigterweise angeschaltet wird oder angeschaltet und dann nicht benutzt wird, sie sich automatisch nach einer vorgegebenen Zeit, auch ohne Erhitzung, wieder abschaltet.

In einer Ausführungsform kann die Handhabe 11 als Stanzformteil ausgebildet sein, wobei der Lichtleiter an seinem hinteren Ende einen Flansch aufweist, sodass der Lichtleiter, wenn er durch eine zentrale Öffnung im Stanzformteil durchgeführt wird und im Rohr befestigt wird, die Handhabe befestigt. Insbesondere kann der Lichtleiter mit einer Presspassung oder einem Gewinde im Rohr befestigt werden.

Die Vorrichtung kann mit einer elektrischen Ladevorrichtung versehen sein, die ein Aufladen der Spannungsquelle ermöglicht. Die Ladevorrichtung kann ein Anschluss für ein Ladekabel sein. Auch können elektrische Kontakte beabstandet am Gehäuse der Vorrichtung vorgesehen sein, die mit entsprechenden Versorgungskontakten verbunden werden können, z.B. wenn die Vorrichtung in einer Halterung abgelegt ist.

Weiterhin kann die Ladevorrichtung eine Induktionsspule in der Vorrichtung aufweisen, die mittels eines elektrischen Feldes versorgt wird. Schließlich kann die Ladevorrichtung auch noch mechanisch betätigbar sein, sodass durch Relativbewegungen von Gehäuseteilen der Vorrichtung oder durch kinetische Energie, beispielsweise eingebracht durch Schütteln der Vorrichtung, die Spannungsquelle geladen wird, insbesondere durch Bewegung eines Magneten bezüglich einer Spule oder durch ein Piezoelement. Durch die Wiederaufladbarkeit der Spannungsquelle kann diese kleiner ausgeführt werden, und somit die Vorrichtung insgesamt kompakter ausgestaltet werden.

## Patentansprüche

1. Vorrichtung (1) zum Erfassen der Innentemperatur eines Nahrungsmittels (2), mit
einem ersten Gehäuseabschnitt (4), der in das Nahrungsmittel (2) für die Messung einführbar ist,
einem zweiten Gehäuseabschnitt (10), der dazu geeignet ist, aus dem Nahrungsmittel (2) herauszuragen, und
wenigstens einem Temperatursensor (3), der in dem ersten Gehäuseabschnitt (4) angeordnet ist,
sowie mit einer Spannungsquelle (7),
einer elektronischen Auswerteeinheit (6) zum Überprüfen wenigstens einer vorgegebenen Temperaturbedingung, und
einer Temperaturanzeige (8),
wobei die Vorrichtung (1) autark ist, WOBEI
der erste Gehäuseabschnitt (4) ausgelegt ist, zum präzisen, vornehmlich kontinuierlichen Messen der Innentemperatur des Nahrungsmittels (2) während der Zubereitung, insbesondere während eines Grillvorgangs, innerhalb des Nahrungsmittels (2) zu verbleiben, und hierzu
**dadurch gekennzeichnet, dass**
wenigstens die Auswerteeinheit (6) und die Temperaturanzeige (8) in dem ersten Gehäuseabschnitt (4) angeordnet sind, und der zweite Gehäuseabschnitt (10) so gestaltet ist, dass eine von der Auswerteeinheit durch die Temperaturanzeige (8) ausgegebene Information wahrnehmbar ist.

2. Vorrichtung nach Anspruch 1, wobei der wenigstens ein Temperatursensor (3) so angeordnet ist, dass eine integrale Temperaturmessung über zumindest einen Bereich des ersten Gehäuseabschnitts (4) erfolgt.

3. Vorrichtung nach Anspruch 1 oder 2, wobei der Temperatursensor (3) zur Innenseite des ersten Gehäuseabschnitts (4) beabstandet ist.

4. Vorrichtung nach einem der vorangehenden Ansprüche, wobei eine Statusanzeige (12) zum Anzeigen der von der Temperaturanzeige (8) ausgegebenen Information am zweiten Gehäuseabschnitt (10) angeordnet ist und bei der Zubereitung außerhalb des Nahrungsmittels (2) verbleibt.

5. Vorrichtung nach Anspruch 4, wobei die Temperaturanzeige (8) mit der Statusanzeige (12) durch einen oder mehrere Lichtleiter (13), insbesondere eine Glasleitung, optisch verbunden ist.

6. Vorrichtung nach einem der vorangehenden Ansprüche, wobei die Vorrichtung (1) ausgelegt ist, das Erreichen einer ersten Temperaturbedingung, und weiterhin das darauffolgende Erreichen einer zweiten, vorzugsweise höheren Temperaturbedingung oder einer Zeitbedingung durch die Temperaturanzeige (8) anzuzeigen, wodurch insbesondere eine Überwachung einer Nachgarzeit möglich ist.

7. Vorrichtung nach einem der vorangehenden Ansprüche, wobei auf der Temperaturanzeige (8) verschiedene Garstufen mittels verschiedener Farben und/oder Blink/Tonsignalen anzeigbar sind.

8. Vorrichtung nach einem der vorangehenden Ansprüche, wobei wenigstens die Auswerteeinheit (6) durch Verschieben und/oder Verdrehen des zweiten Gehäuseteils (10) bezüglich des ersten Gehäuseteils (4) aktivierbar ist.

9. Vorrichtung nach einem der vorangehenden Ansprüche, wobei wenigstens die Auswerteeinheit (6) durch einen Magneten aktivierbar ist.

10. Vorrichtung nach einem der vorangehenden Ansprüche, wobei die Vorrichtung (1) zwei beabstandete elektrisch leitende Bereiche am ersten Gehäuseabschnitt (4) aufweist, und durch die elektrische Überbrückung mittels der Leitfähigkeit des Nahrungsmittels (2) dieser Bereiche aktivierbar ist.

11. Vorrichtung nach einem der vorangehenden Ansprüche, wobei ein Sendemittel vorgesehen ist, mit dem Informationen, die von der Auswerteeinheit (6) bestimmt wurden, an eine von der Vorrichtung (1) separate Anzeigeeinrichtung übermittelt werden.

12. Vorrichtung nach einem der vorangehenden Ansprüche, wobei die wenigstens eine vorgegebene Temperaturbedingung in der Auswerteeinheit (6) einstellbar ist.

13. Verfahren zum Zubereiten eines Nahrungsmittels durch einen Garvorgang, insbesondere einen Grillvorgang, mit den folgenden Schritten:
a) Einführen einer autarken Temperaturerfassungsvorrichtung (1) in das Nahrungsmittel (2), sodass ein erster Gehäuseabschnitt (4) in dem Nahrungsmittel (2) angeordnet ist, und wenigstens ein Temperatursensor (3), eine Auswerteeinheit (6) und eine Temperaturanzeige (8) in dem ersten Gehäuseabschnitt (4) angeordnet sind, während ein zweiter Gehäuseabschnitt (10) aus dem Nahrungsmittel (2) herausragt;
b) präzises, vornehmlich kontinuierliches Messen der Innentemperatur des Nahrungsmittels (2) während des Zubereitens, insbesondere während eines Grillvorgangs, durch die Vorrichtung (1), wozu der erste Gehäuseabschnitt (4) innerhalb des Nahrungsmittels (2) verbleibt;
c) Überprüfen wenigstens einer Temperaturbedingung durch die Auswerteeinheit (6); und
d) Ausgeben einer Information von der Auswerteeinheit (6) durch die Temperaturanzeige (8).

14. Verfahren nach Anspruch 13, wobei anhand der Temperaturbedingung in Abhängigkeit vom Temperaturgradienten und/oder der Temperatur bestimmt wird, ob ein gewünschter Garzustand erreicht ist.

15. Verfahren nach Anspruch 13 oder 14, wobei dem Bediener der Vorrichtung (1) auf akustische, optische und/oder haptische Weise das Erreichen einer vorgegebenen Temperaturbedingung bezüglich des Nahrungsmittels (2) signalisiert wird, insbesondere durch Ton-, Bild- oder Mechaniksignale z. B. durch Piepen, Summen, Abspielen einer Melodie und/oder Blinken, beziehungsweise Vibrieren.

## Claims

1. Device (1) for detecting the internal temperature of a foodstuff (2), with
a first housing section (4) which can be inserted in the foodstuff (2) for the measurement,
a second housing section (10) which protrudes from the foodstuff (2), and
at least one temperature sensor (3) which is arranged in the first housing section (4),
and having a voltage source (7),
an electronic analysing unit (6) for checking at least one predefined temperature condition, and
a temperature indicator (8),
wherein the device (1) is autonomous, and
for precise, especially continuous, measuring of the internal temperature of the foodstuff (2) during preparation, in particular during a grilling process, the first housing section (4) is designed to remain within the foodstuff (2),
**characterised in that** for this purpose, at least the analysing unit (6) and the temperature indicator (8) are arranged in the first housing section (4), and the second housing section (10) is designed so that information output by the analysing unit via the temperature indicator (8) is perceptible.

2. Device according to claim 1, wherein the at least one temperature sensor (3) is arranged so that an integral temperature measurement is carried out over at least a part of the first housing section (4).

3. Device according to claim 1 or 2, wherein the temperature sensor (3) is spaced apart from the internal face of the first housing section (4).

4. Device according to one of the preceding claims, wherein a status indicator (12) for displaying the information output by the temperature indicator (8) is arranged on the second housing section (10) and remains outside of the foodstuff (2) during preparation.

5. Device according to claim 4, wherein the temperature indicator (8) is optically connected to the status indicator (12) by one or more light conductors (13), in particular a glass conductor.

6. Device according to one of the preceding claims, wherein the device (1) is designed to indicate via the temperature indicator (8) when a first temperature condition is reached and then when a second, preferably higher, temperature condition is subsequently reached or a time condition, whereby in particular the monitoring of a resting period is possible.

7. Device according to one of the preceding claims, wherein different degrees of doneness can be displayed on the temperature indicator (8) by means of different colours and/or flashing/audio signals.

8. Device according to one of the preceding claims, wherein at least the analysing unit (6) can be activated by displacing and/or rotating the second housing section (10) relative to the first housing section (4). -

9. Device according to one of the preceding claims, wherein at least the analysing unit (6) can be activated by a magnet.

10. Device according to one of the preceding claims, wherein the device (1) has two electrically conductive regions spaced apart on the first housing section (4) and can be activated by electrical bridging of these regions by means of the conductivity of the foodstuff (2).

11. Device according to one of the preceding claims, wherein a transmission means is provided, by means of which information determined by the analysing unit (6) is transmitted to a display device that is separate from the device (1).

12. Device according to one of the preceding claims, wherein the at least one predefined temperature condition can be set in the analysing unit (6).

13. Method of preparing a foodstuff by a cooking process, in particular a grilling process, comprising the following steps:
a) insertion of an autonomous temperature detection device (1) in the foodstuff (2) so that a first housing section (4) is arranged within the foodstuff (2), and at least one temperature sensor (3), an analysing unit (6) and a temperature indicator (8) are arranged in the first housing section (4), while a second housing section (10) protrudes from the foodstuff (2);
b) precise, in particular continuous, measuring of the internal temperature of the foodstuff (2) during preparation, in particular during a grilling process, by the device (1), for which purpose the first housing section (4) remains within the foodstuff (2);
c) checking at least one temperature condition by the analysing unit (6); and
d) outputting information from the analysing unit (6) via the temperature indicator (8).

14. Method as claimed in claim 13 , wherein it is determined whether a desired degree of doneness has been reached on the basis of the temperature condition depending on the temperature gradient and/or the temperature.

15. Method as claimed in claim 13 or 14, wherein the operator of the device (1) is signalled acoustically, optically and/or haptically that a predefined temperature condition with respect to the foodstuff (2) has been reached, in particular by acoustic, visual or mechanical signals, e.g. by beeping, buzzing, playing a melody and/or flashing or vibrating.

## Revendications

1. Dispositif (1) destiné à relever la température interne d'un produit alimentaire (2), comprenant un premier tronçon de boitier (4), qui peut être introduit dans le produit alimentaire (2) pour la mesure,
un deuxième tronçon de boitier (10), qui est adapté à faire saillie hors du produit alimentaire (2), et
au moins un capteur de température (3), qui est agencé dans le premier tronçon de boitier (4),
ainsi qu'une source de tension (7),
une unité électronique de traitement de données (6) pour vérifier au moins une condition de température prescrite, et
un indicateur de température (8),
le dispositif (1) étant autarcique, et
le premier tronçon de boitier (4) étant conçu, en vue de la mesure précise, principalement continue, de la température interne du produit alimentaire (2) pendant sa préparation, notamment pendant une phase où on le fait griller, pour rester à l'intérieur du produit alimentaire (2),
**caractérisé en ce qu'**à cet effet au moins l'unité de traitement de données (6) et l'indicateur de température (8) sont agencés dans le premier tronçon de boitier (4), et le deuxième tronçon de boitier (10) est conçu de manière à pouvoir percevoir une information délivrée par l'unité de traitement de données par l'intermédiaire de l'indicateur de température (8).

2. Dispositif selon la revendication 1, dans lequel ledit au moins un capteur de température (3) est agencé de façon à ce que soit effectuée une mesure de température intégrale sur au moins une zone du premier tronçon de boitier (4).

3. Dispositif selon la revendication 1 ou la revendication 2, dans lequel le capteur de température (3) est situé à distance du côté intérieur du premier tronçon de boitier (4).

4. Dispositif selon l'une des revendications précédentes, dans lequel un indicateur d'état (12) destiné à indiquer l'information délivrée par l'indicateur de température (8), est agencé sur le deuxième tronçon de boitier (10) et reste à l'extérieur du produit alimentaire (2) lors de la préparation de celui-ci.

5. Dispositif selon la revendication 4, dans lequel l'indicateur de température (8) est relié par voie optique à l'indicateur d'état (12), par l'intermédiaire d'un ou de plusieurs guides d'ondes lumineuses (13) ou fibres optiques, notamment un guide à fibre de verre.

6. Dispositif selon l'une des revendications précédentes, dans lequel le dispositif (1) est conçu pour indiquer, par l'intermédiaire de l'indicateur de température (8), le moment où l'on atteint une première condition de température, et par ailleurs le moment ultérieur où l'on atteint une deuxième condition de température, de préférence plus élevée, ou une condition de temps, ce qui rend possible notamment une surveillance d'un temps de post-cuisson.

7. Dispositif selon l'une des revendications précédentes, dans lequel sur l'indicateur de température (8), différents degrés de cuisson peuvent être indiqués à l'aide de différentes couleurs et/ou différents signaux de clignotement ou sonores.

8. Dispositif selon l'une des revendications précédentes, dans lequel au moins l'unité de traitement de données (6) peut être activée par coulissement et/ou rotation de la deuxième partie de boitier (10) par rapport à la première partie de boitier (4).

9. Dispositif selon l'une des revendications précédentes, dans lequel au moins l'unité de traitement de données (6) peut être activée à l'aide d'un aimant.

10. Dispositif selon l'une des revendications précédentes, dans lequel le dispositif (1) présente deux zones électriquement conductrices situées à distance l'une de l'autre dans le premier tronçon de boitier (4), et. est activé par pontage électrique de ces zones au moyen de la conductibilité électrique du produit alimentaire (2).

11. Dispositif selon l'une des revendications précédentes, dans lequel il est prévu un moyen d'émission à l'aide duquel des informations, qui ont été déterminées par l'unité de traitement de données (6), sont transmises à un dispositif indicateur séparé du dispositif (1).

12. Dispositif selon l'une des revendications précédentes, dans lequel ladite au moins une condition de température prescrite peut être réglée dans l'unité de traitement de données (6).

13. Procédé pour assurer la préparation d'un produit alimentaire par une opération de cuisson, notamment en le faisant griller, comprenant les étapes suivantes :
a) introduction d'un dispositif autarcique de relevé de température (1) dans le produit alimentaire (2), de manière à ce qu'un premier tronçon de boitier (4) soit agencé dans le produit alimentaire (2), et au moins un capteur de température (3), une unité de traitement de données (6) et un indicateur de température (8) sont agencés dans le premier tronçon de boitier (4), tandis qu'un deuxième tronçon de boitier (10) fait saillie hors du produit alimentaire (2) ;
b) mesure précise, principalement continue, de la température interne du produit alimentaire (2) pendant la préparation, notamment pendant une phase où on le fait griller, au moyen du dispositif (1), le premier tronçon de boitier (4) restant à cet effet à l'intérieur du produit alimentaire (2) ;
c) vérification d'au moins une condition de température par l'unité de traitement de données (6) ; et
d) délivrance d'une information de l'unité de traitement de données (6), par l'indicateur de température (8).

14. Procédé selon la revendication 13, d'après lequel au regard de la condition de température, on détermine, en fonction du gradient de température et/ou de la température, si l'on a atteint un état de cuisson souhaité.

15. Procédé selon la revendication 13 ou la revendication 14, d'après lequel on signale par voie acoustique, optique et/ou haptique, à un utilisateur du dispositif (1), le fait que l'on a atteint une condition de température prescrite concernant le produit alimentaire (2), notamment par des signaux sonores, visuels ou mécaniques, par exemple par émission de bips, d'une sonnerie, d'une mélodie et/ou par clignotement, ou par une fonction de vibreur.
